# EUROPÄISCHE PATENTSCHRIFT

(11) **EP 0 595 160 B1**
(45) Veröffentlichungstag und Bekanntmachung des Hinweises auf die Patenterteilung: **16.09.1998**
(21) Anmeldenummer: 93116839.7
(22) Anmeldetag: 19.10.1993
(51) Int. Cl.: F16F 9/30, B61G 11/12

(54) **Stossdämpfer**
Shock absorber
Amortisseur de chocs

(30) Priorität: 24.10.1992 DE 4236040
(43) Veröffentlichungstag der Anmeldung: 04.05.1994
(73) Patentinhaber: Wahle, Michael, Prof. Dr.-Ing., D-52511 Geilenkirchen (DE)
(72) Erfinder: Suess, Gerhard, D-67063 Ludwigshafen (DE); Wahle, Michael, Dr., D-52511 Geilenkirchen (DE); Bung, Richard, Dr., D-67069 Ludwigshafen (DE)

(56) Entgegenhaltungen:
- EP-A- 0 268 061
- EP-A- 0 400 416
- EP-A- 0 518 126
- DE-A- 2 324 402
- DE-A- 3 002 948
- DE-A- 3 405 907
- DE-C- 3 915 115
- US-A- 4 002 244
- US-A- 4 759 428
- PATENT ABSTRACTS OF JAPAN vol. 9, no. 206 (M-406) (1929) 23. August 1985 & JP-A-60 065 930 (NIHON HATSUJIYOU KK) 15. April 1985

## Beschreibung

Die Erfindung betrifft einen Stoßdampfer, insbesondere für Schienenfahrzeuge, mit zwei teleskopartig ineinander geführten und miteinander verspannten Gehäuseteilen sowie wenigstens zwei in den Gehäuseteilen angeordneten Einrichtungen zur Absorption mechanischer Energie, von denen eine Einrichtung aus einer mit einem fließfähigen Medium gefüllten Kolben-Zylinder-Einheit besteht.

Ein derartiger Stoßdämpfer ist aus der EP-B-0 268 061 bekannt. Dabei enthalten die Gehäuseteile separate und mit einem kompressibelen Medium gefüllte Druckzylinder. Zwischen den Druckzylindern sind in einem Führungsring für den Kolben bzw. die Kolbenstange Öffnungen zum ungehinderten Durchströmen des Mediums vorgesehen. Ein solcher Stoßdämpfer ermöglicht ein nur schwach gedämpftes Einfedern und ist somit nicht für jeden möglichen Belastungsfall optimal zu gestalten.

Dasselbe gilt für den Stoßdämpfer für Schienenfahrzeuge gemäß der US-A-4 002 244. Dieser Stoßdämpfer verbindet die Dämpfung durch Metall- oder Gummifedern mit der Dämpfung durch Drosselung einer Flüssigkeit, wobei als Flüssigkeit beispielsweise ein gasförmiges Medium enthaltendes Silikonöl verwendet wird.

Weiterhin gibt es Scherelemente zur dynamischen Abstützung von Kräften zwischen zwei Teilen eines Aggregats, die schwingungsförmige Relativbewegungen gegeneinander ausführen können (DE-A-37 38 716). Die Abstützwirkung erfolgt im niederfrequenten Schwingungsbereich überwiegend durch die Scherkräfte der sich dilatant scherverdickenden Flüssigkeit. Gleichzeitig wird eine der Querschnittsfläche des mit Flüssigkeit gefüllten Scherelements proportionale, große Flüssigkeitsmenge verdrängt. Dies führt aber, insbesondere bei hohen Schwingungsfrequenzen zu einem unerwünschten Anstieg der dynamischen Trägheitssteifigkeit und damit zu einer stark verminderten Schwingungsisolation.

Mit der Erfindung soll ein Stoßdämpfer, insbesondere für Schienenfahrzeuge geschaffen werden, der die Dämpfung durch eine sich dilatant scherverdickende Flüssigkeit mit einer weiteren Dämpfung, auch zur einfachen Realisierung von Rückstellkräften, in der Weise kombiniert, daß sich bei hoher Einfederungsgeschwindigkeit ein hoher Kraftaufbau und bei langsamen Einfedern nur ein geringer Kraftaufbau ergibt, wobei die Rückfederung mit einer weitgehend konstanten Geschwindigkeit erfolgt.

Zur Lösung dieser Aufgabe werden die Maßnahmen nach dem Kennzeichen des Anspruchs 1 vorgeschlagen.

Erfindungsgemäß verwendet der Stoßdämpfer eine Druckfeder, vorzugsweise aus zellelastischem Werkstoff und eine nach dem Verdrängerprinzip arbeitende Kolben-Zylinder-Einheit, die mit einer Flüssigkeit gefüllt ist, welche extrem dilatante Eigenschaften aufweist. Im Belastungsfall wird von beiden Einrichtungen praktisch gleichzeitig mechanische Energie absorbiert. Der Stoßdämpfer ist sowohl für nahezu statische Belastungen, bei welchen die Belastung nur sehr langsam erfolgt als auch für stark dynamische, d.h. mit hoher Geschwindigkeit verlaufende Belastungen geeignet. Dabei ergibt sich oberhalb einer definierbaren Stoßgeschwindigkeit (Grenzgeschwindigkeit) näherungsweise eine rechteckige Kraft-Weg-Kennlinie, die für einen sehr guten Energievernichtungsgrad steht. Insbesondere können sehr hohe Kräfte aufgenommen werden.

Die Geschwindigkeit der Rückfederung liegt im Bereich derselben Grenzgeschwindigkeit mit gegenüber der Einfederung vergleichbarer Energiedisdipation. Auf diese Weise lassen sich gegenüber Stoßdämpfersystemen mit linearer Progression wesentlich kleinere Maximalkräfte realisieren.

Unterhalb der Grenzgeschwindigkeit ergibt sich im Belastungsfall ein weicher Anlauf, der dann in eine Progression mit hohen Endkräften übergeht. So ist beispielsweise bei Stoßdämpfern für Eisenbahnwagen letzteres sehr günstig bei Kurvenfahrten, da Verspannungszustände im Zugverband geringgehalten werden.

Der Stoßdämpfer ist sehr robust; er kann im Bereich von etwa -40°C bis etwa 80°C eingesetzt werden. Die Abhängigkeit seiner Feder-bzw. Dämpfungscharakteristik von der Temperatur kann durch entsprechende dilatante Flüssigkeiten und zellelastische Werkstoffe kleingehalten werden.

Geeignete zellelastische Werkstoffe für die Druckfeder sind insbesondere Polyurethan-Elastomere einer Dichte von 300 bis 800 kg/m³, die nach dem Polyadditionsverfahren unter Verwendung von Isocyanaten und Polyestern oder Polyethern hergestellt sind. Der Federkörper wird in an sich bekannter Weise nach dem Gieß- oder Spritzgießverfahren gefertigt. Seine Formgebung kann so an die jeweiligen Einbaubedingungen und an das entsprechende Gehäuseteil leicht angepaßt werden. Entscheidend für die Größe seines Durchmessers und seiner Lange sowie gegebenenfalls die Kontur seiner Außenflächen sind lediglich die Große der Kraftaufnahme und die Länge des Federweges.

Die Druckfeder aus zellelastischem Werkstoff steht mit einer koaxial zu ihr angeordneten Kolben-Zylinder-Einheit, die mit einem fließfähigen Medium vollständig gefüllt ist, in Wirkverbindung. Als fließfähige Medien im Sinne der Erfindung kommen zweckmäßig dilatante Flüssigkeiten, insbesondere Copolymerdispersionen enger Teilchengrößenverteilung mit breitem Konzentrationsbereich dilatanten Fließverhaltens, wie sie beispielsweise in der DE-A-30 25 562 beschrieben sind, in Betracht. Diese verdicken sprungförmig unter der Einwirkung von Scherkräften und entfalten bei einer Schergeschwindigkeit von etwa 0,1 bis etwa 1000 sec⁻¹ eine Erhöhung der Schubspannung auf mehr als 10⁶ Pa.

Zweckmäßige Weiterbildungen des erfindungsgemäßen Stoßdämpfers sind Gegenstand der Unteransprüche 2 bis 5.

Die Erfindung wird nachfolgend unter Hinweis auf die Zeichnungen näher erläutert.

Es zeigt
- Figur 1: einen Längsschnitt durch den unbelasteten Stoßdämpfer mit in seiner ersten Endstellung befindlichem Kolben bzw. Zylinder der Kolben-Zylinder-Einheit,
- Figur 2: einen Längsschnitt durch den belasteten Stoßdämpfer mit in seiner zweiten Endstellung befindlichem Kolben bzw. Zylinder,
- Figur 3: eine Schnittdarstellung einer anderen Ausführungsform des Kolbens der Kolben-Zylinder-Einheit,
- Figur 4: eine weitere Ausführungsform des Kolbens mit in Strömungsrichtung der dilatanten Flüssigkeit sich erstreckenden Durchbrüchen und
- Figur 5: eine Schnittdarstellung des Kolbens entsprechend Figur 4 mit einer die Durchbrüche nach Art eines Rückschlagventils verschließenden Abdeckung.

Im wesentlichen besteht der Stoßdämpfer aus zwei teleskopartig ineinander geführten und miteinander verspannten Gehäuseteilen (1) und (2), wobei das Gehäuseteil (1) an einem Träger des nicht näher dargestellten Schienenfahrzeuges befestigt ist, während das Gehäuseteil (2) stirnseitig mit der in üblicher Weise ausgeführten Pufferplatte (3) abschließt. Im Innern der Gehäuseteile sind zwei Einrichtungen zur Absorption mechanischer Energie vorgesehen, von denen die eine Einrichtung als Druckfeder (4) aus zellelastischem Werkstoff, insbesondere Polyurethan, und die andere Einrichtung als Kolben-Zylinder-Einheit (5, 6, 7) ausgebildet ist. Die Druckfeder in Form eines Hohlzylinders mit nichtebener äußerer Mantelfläche und die Kolben-Zylinder-Einheit sind koaxial zueinander angeordnet, wobei die Druckfeder auf der Kolbenstange (7) geführt ist. Zwischen der Druckfeder und der Kolben-Zylinder-Einheit ist eine gegenüber der Kolbenstange abgedichtete und auf dieser hin- und herbewegbare Druckplatte (8) erkennbar. Die Druckplatte ist mit dem Zylinder (5) fest verbunden und bildet somit den Abschluß des Zylinders auf einer Stirnseite. Der stirnseitige Abschluß des Zylinders auf der anderen Seite erfolgt durch den auf der Kolbenstange geführten Steg (9). Für die Abdichtung des Zylinders an der Kolbenstange sind Abstreif- und Dichtelemente (10, 11) vorgesehen. Im Innern des vollständig mit einer dilatanten Flüssigkeit gefüllten Zylinders (5) ist ein Kolben (6) form- und kraftschlüssig mit der Kolbenstange (7) verbunden. Mit (12) und (13) sind Öffnungen für die Befüllungen und Entlüftung des Zylinders bezeichnet.

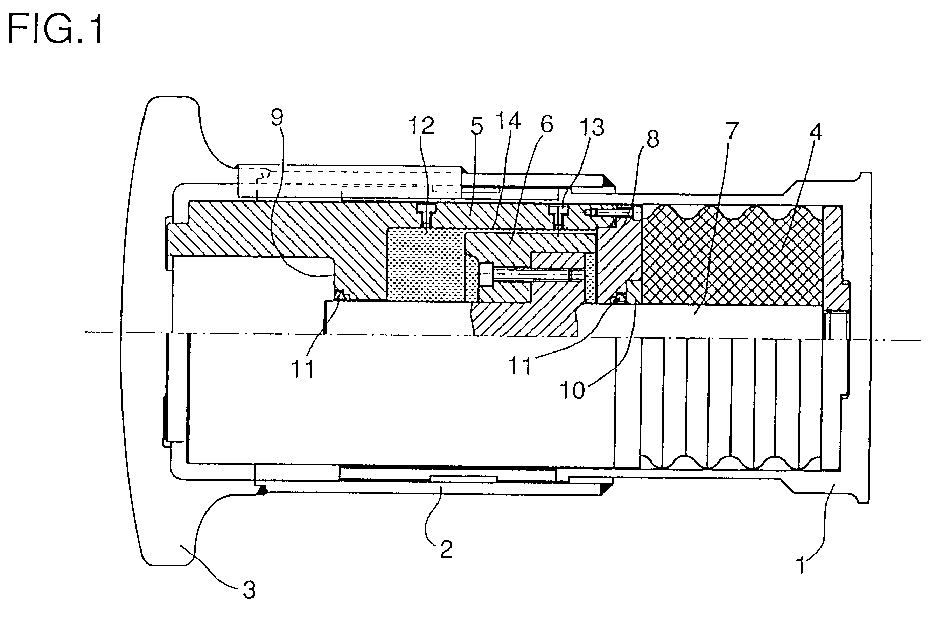

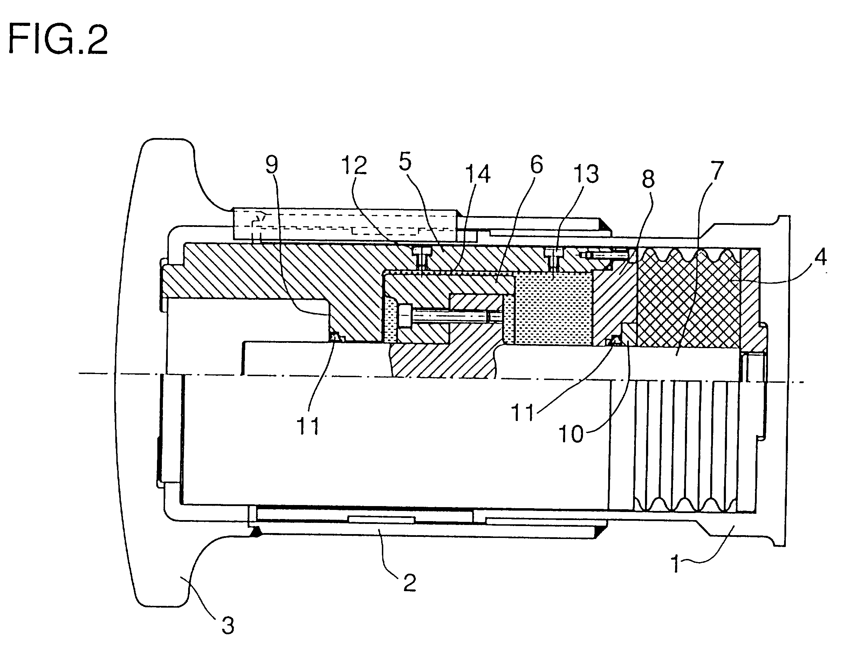

Aus den Figuren 1 und 2 ist ersichtlich, daß im Lastfall die Dämpfung gleichzeitig durch Verformungsenergie der Druckfeder (4) aus zellelastischem Werkstoff und durch Drosselung bzw. Scherung der dilatanten Flüssigkeit in dem von den Mantelflächen des Kclbens (6) und des Zylinders (5) definierten Scherspalt (14) erfolgt. Es ist überdies erkennbar, daß je größer die ausgeübte Belastung und folglich je größer die Verformung der Druckfeder (4) ist, umso mehr die Scherung der dilatanten Flüssigkeit vergrößert ist. Mit der Scherung, d.h. mit dem Ansteigen der Schergeschwindigkeit, einher geht die Schubspannungszunahme der dilatanten Flüssigkeit in dem Scherspalt (14). Insgesamt haben sich Scherspaltweiten von etwa 1 bis etwa 20 mm als zweckmäßig erwiesen.

Durch eine bei Schienenfahrzeugen übliche, stoßartige Belastung des Stoßdämpfers wird eine kritische Strömungsgeschwindigkeit der im Zylinder (5) eingesetzten Flüssigkeit erreicht, und es erhöht sich die Viskosität der Flüssigkeit sprunghaft und dilatant. Dies führt zu einem gegenüber einer unterkritischen Strömungsgeschwindigkeit, um bis zu 4 Dekaden höheren Druckverlust im Scherspalt (14). Innerhalb dieses Anstiegs des Druckverlustes bzw. des Druckanstiegs im Zylinder bleibt die Strömungsgeschwindigkeit und damit die Geschwindigkeit des Einfederns konstant. Die dilatante Flüssigkeit entfaltet dabei eine Erhöhung der Schubspannung bis zu vier Dekaden.

Wenn auf den Stoßdämpfer keine Belastung mehr ausgeübt wird, erfolgt über die sich ausdehnende Druckfeder (4) die Rückstellung des Zylinders (5) in seine Ausgangsposition. Der Symmetrie wegen wird sich dabei die gleiche kritische Rückstellgeschwindigkeit einstellen.

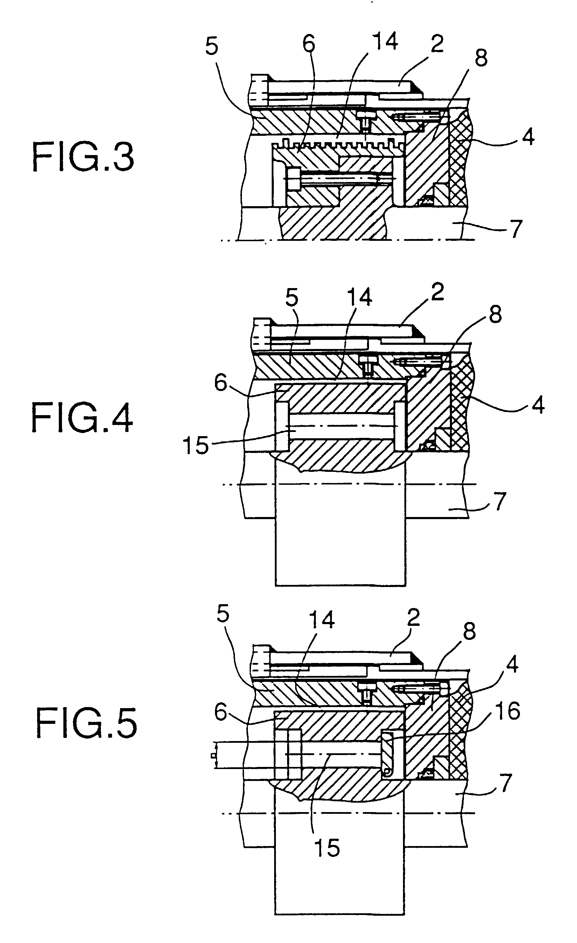

Nach einem weiteren Merkmal der Erfindung kann wenigstens eine der den Scherspalt (14) begrenzenden Mantelflächen des Kolbens (6) und des Zylinders (5) strukturiert sein. Gemäß Figur 3 ist die Mantelfläche des Kolbens (6) in Fließrichtung der dilatanten Flüssigkeit mäanderförmig ausgebildet. Hierdurch ist eine weitere Steigerung der Schubspannungsübertragung erreichbar.

Es ist zudem möglich, die Geschwindigkeit des Einfederns dadurch zu erhöhen, daß, wie in Figur 4 dargestellt, in dem Kolben (6) in Strömungsrichtung der dilatanten Flüssigkeit sich erstreckende Durchbrüche (15) vorgesehen werden. Im allgemeinen können bis zu acht Durchbrüche gleichmäßig am Kolben verteilt sein.

Unterschiedliche Kraftübertragungen durch die dilatante Flüssigkeit während des Einfederns und des Ausfederns des Stoßdämpfers ergeben sich dann, wenn die Durchbrüche (15) auf einer Stirnseite des Kolbens (6) mittels einer nach Art eines Rückschlagventils wirkenden Abdeckung (16) verschließbar sind. Nach der in Figur 5 gezeigten Konstruktion ist der Strömungswiderstand beim Ausfedern des Stoßdämpfers größer, da hierbei ausschließlich eine Strömung der dilatanten Flüssigkeit über den Scherspalt (14) zwischen Kolben und Zylinder (5) erfolgt, während beim Einfedern die Flüssigkeit zusätzlich und unterkritisch durch die Durchbrüche strömt.

## Patentansprüche

1. Stoßdämpfer, insbesondere für Schienenfahrzeuge, mit zwei teleskopartig ineinander geführten und miteinander verspannten Gehäuseteilen (1,2) sowie wenigstens zwei in den Gehäuseteilen angeordneten Einrichtungen zur Absorption mechanischer Energie, von denen eine Einrichtung aus einer mit einem fließfähigen Medium gefüllten Kolben-Zylinder-Einheit (5,6,7) besteht, dadurch gekennzeichnet, daß die Kolben-Zylinder-Einheit (5, 6, 7) mit einer koaxialen Druckfeder (4) in Wirkverbindung steht und eine dilatante Flüssigkeit enthält, die infolge der Relativbewegung des Kolbens (6) bzw. des Zylinders (5) einer Scherung unterworfen wird und bei einer kritischen Schergeschwindigkeit von 0,1 bis 1000 sec⁻¹ eine Erhöhung der Schubspannung von bis zu vier Dekaden erfährt.

2. Stoßdämpfer nach Anspruch 1, dadurch gekennzeichnet, daß die Mantelflächen des Kolbens (6) und des Zylinders (5) zwischen sich einen Scherspalt (14) definieren.

3. Stoßdämpfer nach den Ansprüchen 1 und 2, dadurch gekennzeichnet, daß wenigstens eine der den Scherspalt (14) begrenzenden Mantelflächen in Bewegungsrichtung des Kolbens (6) bzw. des Zylinders (5) mäanderförmig ausgebildet ist.

4. Stoßdämpfer nach Anspruch 1, dadurch gekennzeichnet, daß der Kolben (6) in Strömungsrichtung der dilatanten Flüssigkeit sich erstreckende Durchbrüche (15) aufweist.

5. Stoßdämpfer nach Anspruch 4, dadurch gekennzeichnet, daß die Durchbrüche (15) auf einer Stirnseite des Kolbens (6) mittels einer nach Art eines Rückschlagventils wirkenden Abdekkung (16) verschließbar sind.

## Claims

1. A shock absorber, in particular for rail vehicles, comprising two housing parts (1, 2) that are guided in one another in telescopic fashion and are clamped to each other, and at least two means arranged in the housing parts for absorbing mechanical energy, one of the means consisting of a piston-cylinder unit (5, 6, 7) filled with a flowable medium, wherein the piston-cylinder unit (5, 6, 7) is in operative communication with a coaxial compression spring (4) and contains a dilatant liquid which due to the relative movement of the piston (6) and the cylinder (5), respectively, is subjected to shear and, at a critical shear speed of 0.1 to 1000 sec⁻¹, is subjected to an increase in shear strain of up to four decades.

2. The shock absorber according to claim 1, wherein the surface areas of the piston (6) and of the cylinder (5) define a shear gap (14) thereinbetween.

3. The shock absorber according to claims 1 and 2, wherein at least one of the surface areas defining the shear gap (14) has a meander-like configuration in the direction of movement of the piston (6) and the cylinder (5), respectively.

4. The shock absorber according to claim 1, wherein the piston (6) has penetrations (15) extending in the flow direction of the dilatant liquid.

5. The shock absorber according to claim 4, wherein the penetrations (15) are closable at a front side of the piston (6) by means of a cover (16) which is operative in the manner of a check valve.

## Revendications

1. Amortisseur de chocs, notamment pour véhicules sur rails, avec deux éléments de boîtier (1, 2) guidés l'un dans l'autre à la manière d'un télescope et tendus entre eux, ainsi qu'avec au moins deux dispositifs d'absorption mécanique de l'énergie, disposés dans les éléments de boîtier, dont un dispositif consiste en une unité piston/cylindre (5, 6, 7) remplie d'un milieu coulant, caractérisé en ce que l'unité piston/cylindre (5, 6, 7) est en combinaison d'action avec un ressort de pression coaxial (4) et qu'elle contient un liquide dilatant qui suite au mouvement relatif du piston (6) ou du cylindre (5), est soumis à un cisaillement et qui à une vitesse de cisaillement critique de 0,1 à 1000 sec ⁻¹ connait une augmentation de la contrainte au cisaillement pouvant atteindre quatre décades.

2. Amortisseur de chocs selon la revendication 1, caractérisé en ce que les surfaces latérales du piston (6) et du cylindre (5) définissent entre elles une fente de cisaillement (14).

3. Amortisseur de chocs selon les revendications 1 et 2, caractérisé en ce qu'au moins une des surfaces latérales délimitant la fente de cisaillement (14) a la forme de méandres, en direction de la course du piston (5) ou du cylindre (5).

4. Amortisseur de chocs selon la revendication 1, caractérisé en ce que le piston (6) présente des percées (15) qui s'étendent en direction du flux du liquide dilatant.

5. Amortisseur de chocs selon la revendication 4, caractérisé en ce que les percées (15) peuvent être fermées sur un côté frontal du piston (6) par un recouvrement (16) fonctionnant la façon d'un clapet de non-retour.
